# EUROPÄISCHE PATENTSCHRIFT

(11) **EP 3 372 864 B1**
(45) Veröffentlichungstag und Bekanntmachung des Hinweises auf die Patenterteilung: **11.09.2019**
(21) Anmeldenummer: 17465508.4
(22) Anmeldetag: 07.03.2017
(51) Int. Cl.: F16F 9/38, F16F 9/05

(54) **LUFTFEDER MIT EINEM FALTENBALG**
AIR SPRING WITH A BELLOWS-TYPE CONNECTION
RESSORT À AIR COMPRENANT UN SOUFFLET

(43) Veröffentlichungstag der Anmeldung: 12.09.2018
(73) Patentinhaber: Continental Teves AG & Co. OHG, 60488 Frankfurt am Main (DE)
(72) Erfinder: Cotora, Ionut, 557260 Selimbar (RO); Wehaus, Holger, 30449 Hannover (DE)

(56) Entgegenhaltungen:
- CN-U- 204 716 854
- DE-A1-102013 107 826
- DE-U1-202015 106 333

## Beschreibung

Die Erfindung betrifft eine Luftfeder gemäß dem Oberbegriff von Anspruch 1.

Luftfedern oder Luftfederbeine, die zwischen einem Fahrwerk und einer Karosserie eines Kraftfahrzeuges eingespannt werden und einen Rollbalg aufweisen, welcher wiederum zwischen einem Luftfederdeckel und einem Luftfederkolben befestigt ist, sind in einer Vielzahl von Ausführungen bekannt. Die Luftfeder steht im Betrieb unter einem inneren Überdruck. Der Rollbalg rollt unter Last und bei Federbewegungen unter Bildung einer Rollfalte auf der Außenkontur des konzentrischen Luftfederkolbens ab. Zusätzlich kann der Rollbalg auch eine weitere Rollfalte an dem Luftfederdeckel ausbilden.

Bei Luftfedern im PKW-Bereich werden möglichst dünnwandige Rollbälge eingesetzt, da diese einen hohen Abrollkomfort bieten. Um bei diesen eine genügende Tragfähigkeit des Gesamtsystems zu erreichen, werden die Rollbälge bzw. die Luftfedern mit Außenführungen versehen, nämlich mit einer den Rollbalg umgebenden rohrförmigen Hülse als Stützkorsett oder Stützkörper. So lässt sich beispielsweise ein dünner Rollbalg mit einer dünnen Leichtmetallhülse als Stützkörper auf hohe Innendrücke und damit hohe Tragfähigkeiten bei gleichzeitig gutem Harshness-Verhalten optimieren. Die Außenführungen sind dabei so ausgebildet und angeordnet, dass der Rollbalg einerseits an der Außenseite des Luftfederabrollkolbens und andererseits an der Innenoberfläche der Außenführung abrollen kann.

Dies hat jedoch zum Nachteil, dass solche Rollbälge im Gegensatz zu dickwandigen und somit robusteren Rollbälgen im Nutzfahrzeugbereich sehr viel empfindlicher auf Ablagerungen und Fremdkörpern an den Abrollflächen reagieren. Der komfortable Rollbalg reagiert auf das Überrollen von Ablagerungen oder Fremdkörpern sehr leicht mit starkem Abrieb oder Zerstörung seiner Festigkeitsträger, was den Ausfall der Luftfeder zur Folge haben kann.

Daher gilt es die Rollfalten des Rollbalgs besonders zu schützen, was durch einen die Luftfeder umgebenden Schutzbalg oder auch Faltenbalg erreicht wird. Besonders bei außengeführten freistehenden Luftfedern wird ein Faltenbalg verwendet, um den Rollbalg vor Verschmutzungen (z.B. Staub, Sand oder Steinen von der Straße) im Fahrbetrieb zu schützen, wie es beispielsweise aus der DE 10 2009 003 829 A1 bekannt ist. Bei dieser Luftfeder wird der Faltenbalg zu einem am Kolben und zum anderen an einem Kragen oder Vorsprung der Außenführung befestigt. Um im gezeigten Fall auch die untere Rollfalte am Deckel effektiv zu schützen, kann der Faltenbalg zusätzlich am Deckel befestigt werden.

Im Regelfall ist zumindest einer der Faltenbalgbefestigungsbereiche an Kolben oder Deckel im Durchmesser größer als der Außenführungsdurchmesser und folglich auch der Faltenbalg zumindest mit einem seiner Enden im Durchmesser größer als die Außenführung. Dadurch lässt sich im Montageprozess der Faltenbalg sehr einfach über den Rollbalg samt Außenführung schieben und am Kolben oder Deckel befestigen.

Aus der DE 10 2013 107 826 A1 ist eine Luftfeder für ein Kraftfahrzeug bekannt, umfassend einen Deckel und einen Abrollkolben, wobei dazwischen ein Rollbalg aus elastomeren Material eingespannt ist und einen mit Druckluft befüllten Arbeitsraum begrenzt, wobei der Rollbalg zumindest teilweise von einer hülsenförmigen Außenführung umschlossen ist, und wobei ein Faltenbalg den Rollbalg samt Außenführung umgibt. Dieser Faltenbalg ist in zwei Teilfaltenbälge aufgeteilt, wobei ein erster Teilfaltenbalg an einem Ende des Abrollkolbens angeknüpft ist und sich teilweise über die Außenführung erstreckt, wobei ein zweiter Teilfaltenbalg an einem dem Abrollkolben abgewandten Kragen der Außenführung angeknöpft ist und sich teilweise in Richtung des Abrollkolbens erstreckt. Im Mittenbereich der Außenführung sind die beiden Teilfaltenbälge über ein hülsen-förmiges Teil miteinander verbunden. Bei dieser Konstruktion ist ein umständlich auszuformender Kragen an der Außenführung vorgesehen und die beiden Teilfaltenbälge werden über ein weiteres Verbindungsteil miteinander verbunden. Des Weiteren reicht der zweite Teilfaltenbalg nicht bis zum Deckel, sodass ein dritter Teilfaltenbalg benötigt wird, um die Rollfalte am Deckel zu schützen, wobei dieser einseitig offen ist.

Steht allerdings im Einbaubereich der Luftfeder achs- und karosserieseitig nicht genügend Bauraum bzw. Platz für die Luftfederanbauteile (Deckel und Kolben) zur Verfügung, müssen diese zwangsläufig in ihren Abmaßen kleiner dimensioniert werden. Zur Anbindung des Faltenbalgs wird dieser in seinen Endbereichen auf die Luftfederanbauteile (Deckel und Kolben) konfektioniert. Da allerdings die Faltenbalgbefestigungsbereiche von Deckel und Kolben bauraumbedingt im Durchmesser kleiner sind als der Außenführungsdurchmesser, kann folglich der Faltenbalg nicht mehr über die Außenführung geschoben und an den Luftfederanbauteilen befestigt werden.

Daher ist es Aufgabe der Erfindung, eine Luftfeder mit einem verbesserten Faltenbalg bereitzustellen, welche in beengten Bauräumen verbaut werden kann, wobei der Faltenbalg auf einfache Art und Weise mit der Luftfeder montiert wird.

Die der Erfindung zugrundeliegende Aufgabe wird mit den Merkmalen des unabhängigen Patentanspruchs gelöst.

Es wird eine Luftfeder für ein Fahrwerk eines Kraftfahrzeuges bereitgestellt, wobei die Luftfeder einen Luftfederdeckel und einen Luftfederkolben umfasst, wobei zwischen dem Luftfederdeckel und dem Luftfederkolben ein luftdicht befestigter Rollbalg aus elastomerem Material teilweise einen mit Druckluft befüllbaren Arbeitsraum begrenzt, wobei der Rollbalg zumindest teilweise von einer hülsenförmigen Außenführung umschlossen ist, wobei ein Faltenbalg den Rollbalg samt Außenführung umgibt, wobei der Faltenbalg einen ersten Teilfaltenbalg und einen zweiten Teilfaltenbalg umfasst, wobei ein dem zweiten Teilfaltenbalg zugewandter erster Endbereich des ersten Teilfaltenbalgs mit einem dem ersten Teilfaltenbalg zugewandten zweiten Endbereich des zweitens Teilfaltenbalgs verbunden ist.

Der Faltenbalg umfasst zwei separate Teilfaltenbälge. Dabei weist der erste Teilfaltenbalg einen ersten Endbereich und der zweite Teilfaltenbalg einen zweiten Endbereich auf. Der zweite Endbereich des zweiten Teilfaltenbalgs ist dabei dem ersten Endbereich des ersten Teilfaltenbalgs zugewandt. Vorteilhafterweise lassen sich die separaten Teilfaltenbälge im Montageprozess einfach jeweils von den Luftfederanbauteilen (Kolben und Deckel) aus kommend über die Außenführung schieben und der ersten Endbereich mit dem zweiten Endbereich verbinden, womit ein Faltenbalg vorliegt.

Erfindungsgemäß überlappen sich der erste und der zweite Endbereich in Umfangsrichtung. Vorzugsweise überlappen sich ausschließlich der erste und der zweite Endbereich. Somit liegt in Umfangsrichtung der Luftfeder ein Überlapp vor, welcher die Schutzwirkung des Faltenbalgs und somit den Schutz der Rollfalten sicherstellt.

Nach einer bevorzugten Ausführungsform sind dabei der erste und der zweite Endbereich mittels eines lösbaren Formschlusses verbunden. Eine angeformte Verbindungstelle, z.B. in Form einer Stufenkontur, ermöglicht es die Enden der Teilfaltenbälge miteinander zu verbinden, indem diese einfach übereinander geschoben werden und die konturierten Endbereiche ineinandergreifen. Bevorzugt werden der erste und der zweite Endbereich zusätzlich zum Formschluss durch ein Spannmittel zusammengehalten. Die beiden Teilfaltenbälge lassen sich somit auch auf einfache Art und Weise lösen und gegen neue Faltenbälge austauschen und die Endbereiche wieder miteinander sicher verbinden.

Nach einer weiteren bevorzugten Ausführungsform sind der erste und der zweite Endbereich durch Verschweißen oder Verkleben miteinander verbunden. Das Verschweißen oder Verkleben der Endbereiche hält die Teilfaltenbälge sicher zusammen und sichert ebenfalls die Schutzwirkung des Faltenbalgs vor Verschmutzung der Luftfeder.

Nach einer weiteren bevorzugten Ausführungsform sind der erste und der zweite Endbereich durch einen Ring miteinander verbunden, wobei der erste und der zweite Endbereich jeweils an dem Ring angeknöpft sind. Mittels des Zwischen-Ringes zum daran beidseitigen Verknüpfen bzw. Befestigen der Teilfaltenbälge wird eine weitere formschlüssige und lösbare Verbindung der Teilfaltenbälge bereitgestellt. Dabei sind die Endbereiche an umlaufenden Stegen des Ringes angeknöpft. Diese Verbindungsart hat zusätzlich Vorteile im Montage- bzw. Austauschprozess des Faltenbalgs, da sich die Teilfaltenbälge schnell und einfach an dem Ring anknöpfen lassen.

Nach einer weiteren bevorzugten Ausführungsform sind ein erster Faltenbalgbefestigungsbereich an dem Luftfederkolben und ein zweiter Faltenbalgbefestigungsbereich an dem Luftfederdeckel vorgesehen, wobei der Durchmesser des ersten Faltenbalgbefestigungsbereichs und der Durchmesser des zweiten Faltenbalgbefestigungsbereich jeweils kleiner sind als der Durchmesser der Außenführung.

Nach einer weiteren bevorzugten Ausführungsform sind der Durchmesser des anderen Endbereichs des ersten Teilfaltenbalgs und der Durchmesser des anderen Endbereichs des zweiten Teilfaltenbalgs jeweils kleiner als der Durchmesser der Außenführung.

Bei diesen beiden Randbedingungen einer Luftfedergeometrie lassen sich vorteilhafterweise die Teilfaltenbälge auf einfache Art und Weise vom Deckel oder Kolben aus kommend über die Außenführung platzieren.

Verwendung findet die Luftfeder in einem Fahrwerk, vorzugsweise in einem Luftfedersystem, für ein Kraftfahrzeug. Bevorzugt kann der geteilte Faltenbalg auch bei einer Luftfeder mit integriertem Stoßdämpfer verwendet werden.

Weitere bevorzugte Ausführungsformen der Erfindung ergeben sich aus den Unteransprüchen und der nachfolgenden Beschreibung von Ausführungsbeispielen an Hand der Figuren.

Es zeigen
- Fig. 1: eine beispielsgemäße Luftfeder mit einem zweiteiligem Faltenbalg,
- Fig. 2: zwei Ausführungsbeispiele einer Verbindung der Teilfaltenbälge,
- Fig. 3: weitere Ausführungsbeispiele einer Verbindung der Teilfaltenbälge mit einem Spannmittel, und
- Fig. 4: ein drittes Ausführungsbeispiel einer Verbindung der Teilfaltenbälge mit einem Ring.

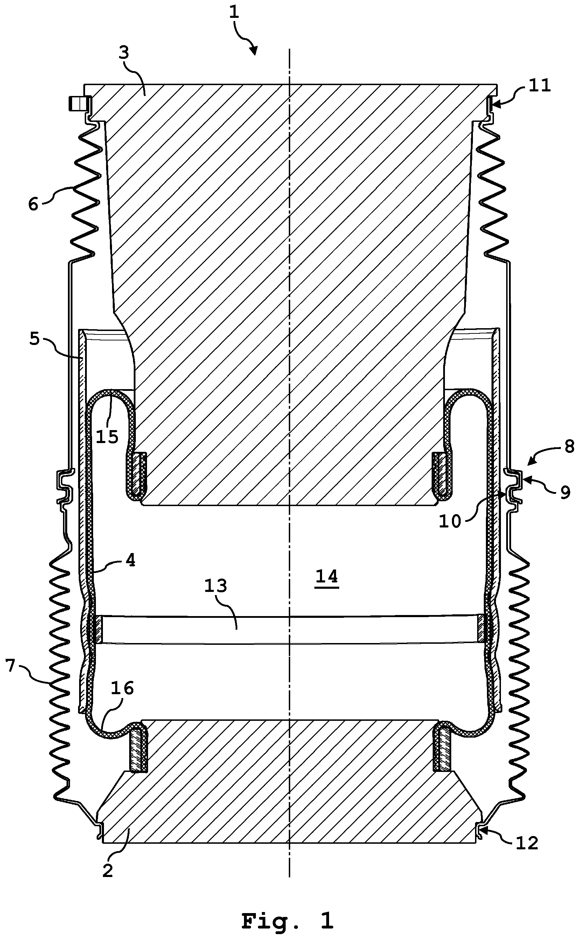

Die Figur 1 zeigt eine freistehende Luftfeder 1 in Über-Kopf-Lage, wobei die Anbauteile der Luftfeder 1, ein Luftfederdeckel 2 und ein Luftfederkolben 3, mit nicht näher dargestellten gefederten und ungefederten Massen verbunden sind. Beispielsweise ist Luftfederkolben 3 an einer Fahrzeugkarossiere und Luftfederdeckel 2 an einem Radträger befestigt. Zwischen Luftfederdeckel 2 und Luftfederkolben 3 ist ein elastomerer Rollbalg 4 mittels Spannringen druckdicht eingespannt, wobei Rollbalg 4 mit Luftfederdeckel 2 und Luftfederkolben 3 teilweise einen luftdichten und mit Druckluft gefüllten Arbeitsraum 14 begrenzt.

Weiterhin ist Rollbalg 4 teilweise von einer hülsenförmigen Außenführung 5 umschlossen, welche mittels eines Innenspannrings 13 am Rollbalg 4 fixiert ist. Unter Last rollt Rollbalg 4 teilweise an der Innenseite der Außenführung 5 und unter Ausbildung einer ersten Rollfalte 15 auf der Abrollfläche des konzentrischen Luftfederkolbens 3 ab. Am Luftfederdeckel 2 rollt Rollbalg 4 nur begrenzt mit einer zweiten Rollfalte 16 ab.

Zum Schutz beider Rollfalten 15, 16 ist Rollbalg 4 samt Außenführung 5 von einem ersten Teilfaltenbalg 6 und einem zweiten Teilfaltenbalg 7 umgeben. Dabei ist der erste Teilfaltenbalg 6 mit einem seiner Enden an einem ersten Faltenbalgbefestigungsbereich 11 des Luftfederkolbens 3 und der zweite Teilfaltenbalg 7 mit einem seiner Enden an einem zweiten Faltenbalgbefestigungsbereich 12 des Luftfederdeckels 2 befestigt. Die jeweiligen einander zugewandten Endbereiche 9, 10 der Teilfaltenbälge 6, 7 sind miteinander verbunden. Dabei überlappt der erste Endbereich 9 des ersten Teilfaltenbalgs 6 den zweiten Endbereich 10 des zweiten Teilfaltenbalgs 7 in Umfangsrichtung.

Bei der beispielsgemäßen Luftfeder 1 sind der erste Faltenbalgbefestigungsbereich 11 am Luftfederkolben 3 und der zweite Faltenbalgbefestigungsbereich 12 am Luftfederdeckel 2 aufgrund beengter Bauraumverhältnisse im Durchmesser kleiner ausgeführt als der Durchmesser der Außenführung 5. Die Befestigungsenden bzw. entsprechenden Endbereiche der Teilfaltenbälge 6, 7 sind auf die Faltenbalgbefestigungsbereiche 11, 12 konfektioniert und somit ebenfalls im Durchmesser kleiner als der Durchmesser der Außenführung 5.

Um die beiden Teilfaltenbälge 6, 7 miteinander zu verbinden und über die Außenführung 5 positionieren zu können, sind deren einander zugewandten Endbereiche 9, 10 im Durchmesser größer als der Durchmesser der Außenführung 5. Somit lassen sich die beiden Teilfaltenbälge 6, 7 im Montageprozess von den Anbauteilen der Luftfeder (Deckel 2 und Kolben 3) her kommend über Außenführung 5 schieben und deren einander zugewandten Endbereiche 9, 10 miteinander verbinden. Die geschaffene Verbindung 8 liegt dabei vorteilhafterweise im Bereich der Außenführung 5.

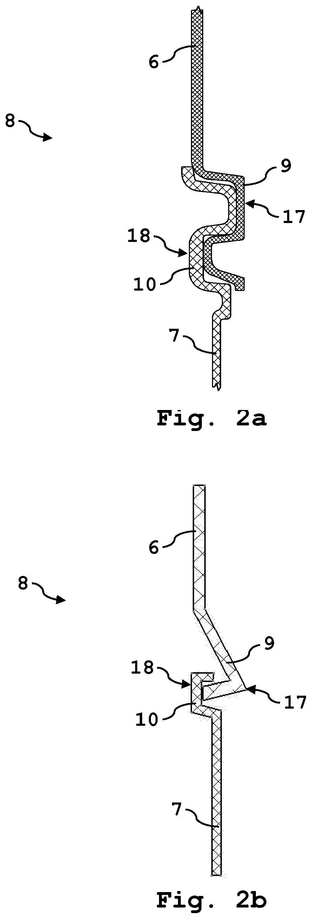

Figuren 2a und 2b zeigen jeweils die Verbindung 8 der einander zugewandten Endbereiche 9, 10 der beiden Teilfaltenbälge 6, 7. Mittels einer gewinkelten Kontur 17 des ersten Endbereichs 9 und dazu in passender Weise eingreifender gewinkelter Kontur 18 des zweiten Endbereichs 10 wird ein lösbarer Formschluss erzeugt. Beide Konturen 17 und 18 weisen eine Erhöhung und eine Vertiefung auf, wobei jeweils eine Erhöhung der einen Kontur in eine Vertiefung der anderen Kontur greift. Der Figur 2a nach sind Konturen 17 und 18 als Stufenkonturen ausgebildet, wobei in besonderer Weise je eine Erhöhungen der einen Kontur eine gemeinsame Kontaktfläche mit der gegenüberliegenden Vertiefung der anderen Kontur aufweist. Der Figur 2b nach ist Kontur 17 des ersten Endbereichs 9 spitzwinklig ausgestaltet und greift in die als Haken ausgebildete Kontur 18 des zweiten Endbereichs 10 ein. Somit lässt sich im Montageprozess bspw. der erste Teilfaltenbalg 6 mit seinem Endbereich 9 über den Endbereich 10 des zweiten Teilfaltenbalgs 7 stülpen und kontaktsicher mit diesem verbinden. Die beispielsgemäße formschlüssige Verbindung 8 lässt auch das Lösen der Endbereiche 6 und 7 auf einfache Art und Weise zu.

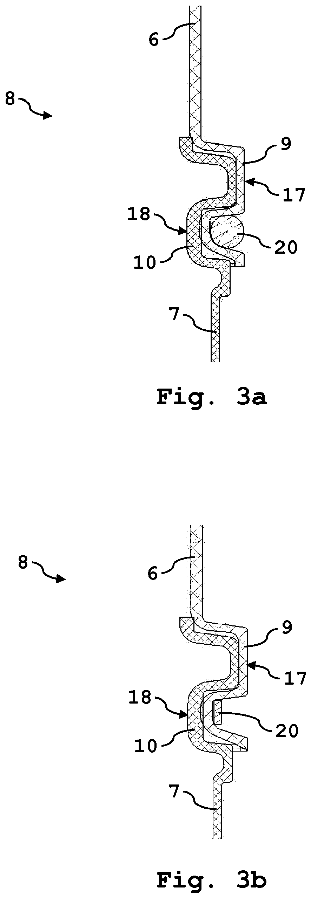

Die Figuren 3a und 3b zeigen zwei Arten einer zweiten beispielsgemäßen Verbindung 8 der beiden Endbereiche 9 und 10, wobei die formschlüssige Verbindung 8 durch ein dazu zusätzliches Spannmittel 20 verstärkt wird. Vorzugsweise besteht das Spannmittel wie in Figur 3a gezeigt aus einem elastomerem Werkstoff, z.B. einem Gummiband oder wie in der Figur 3b gezeigt ist das Spannmittel als Metallring ausgebildet. Spannmittel 20 stellt zum Formschluss eine zusätzliche kraftschlüssige Verbindung der beiden Endbereiche 9 und 10 miteinander dar.

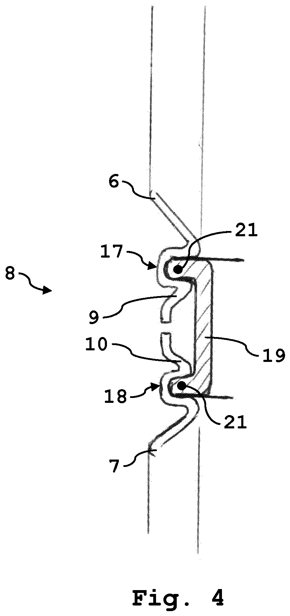

Die Figur 4 zeigt eine dritte beispielsgemäße Möglichkeit den Endbereich 9 des ersten Teilfaltenbalgs 6 mit dem Endbereich 10 des zweiten Teilfaltenbalgs 7 zu verbinden. Dabei ist ein Ring 19 vorgesehen, welcher zwischen den einander zugewandten Endbereichen 9, 10 positioniert ist und an welchem die Endbereiche 9, 10 angeknöpft sind. Dabei weist Ring 19 zwei umlaufende Stege 21 auf, welche jeweils am Randbereich des Ringes 19 vorgesehen sind. An diesen Stegen 21 sind Konturen 17 und 18 der Endbereiche 9, 10 angeknöpft. Damit ist eine weitere formschlüssige Verbindungsart 8 der Teilfaltenbälge 6 und 7 realisiert, welche im Montageprozess einfach zu handhaben ist.

### Bezugszeichenliste

- 1: Luftfeder
- 2: Luftfederdeckel
- 3: Luftfederkolben
- 4: Rollbalg
- 5: Außenführung
- 6: erster Teilfaltenbalg
- 7: zweiter Teilfaltenbalg
- 8: Verbindung
- 9: erster Endbereich
- 10: zweiter Endbereich
- 11: erster Faltenbalgbefestigungsbereich
- 12: zweiter Faltenbalgbefestigungsbereich
- 13: Innenspannring
- 14: Arbeitsraum
- 15: erste Rollfalte
- 16: zweite Rollfalte
- 17: Kontur
- 18: Kontur
- 19: Ring
- 20: Spannmittel
- 21: umlaufender Steg

## Patentansprüche

1. Luftfeder (1) für ein Fahrwerk eines Kraftfahrzeugs umfassend einen Luftfederdeckel (2) und einen Luftfederkolben (3), wobei zwischen dem Luftfederdeckel (2) und dem Luftfederkolben (3) ein luftdicht befestigter Rollbalg (4) aus elastomerem Material teilweise einen mit Druckluft befüllbaren Arbeitsraum (15) begrenzt, wobei der Rollbalg (4) zumindest teilweise von einer hülsenförmigen Außenführung (5) umschlossen ist, wobei ein Faltenbalg den Rollbalg (4) samt Außenführung (5) umgibt, wobei der Faltenbalg einen ersten Teilfaltenbalg (6) und einen zweiten Teilfaltenbalg (7) umfasst, wobei ein dem zweiten Teilfaltenbalg (7) zugewandter erster Endbereich (9) des ersten Teilfaltenbalgs (6) mit einem dem ersten Teilfaltenbalg (6) zugewandten zweiten Endbereich (10) des zweitens Teilfaltenbalgs (7) verbunden ist, **dadurch gekennzeichnet, dass** sich, insbesondere ausschließlich, der erste und der zweite Endbereich (9, 10) in Umfangsrichtung überlappen.

2. Luftfeder (1) nach Anspruch 1, **dadurch gekennzeichnet,** der erste und der zweite Endbereich (9, 10) mittels eines lösbaren Formschlusses verbunden sind.

3. Luftfeder (1) nach Anspruch 2, **dadurch gekennzeichnet, dass** der erste und der zweite Endbereich (9, 10) zusätzlich zum Formschluss durch ein Spannmittel (20) zusammengehalten werden.

4. Luftfeder (1) nach Anspruch 1, **dadurch gekennzeichnet, dass** der erste und der zweite Endbereich (9, 10) durch Verschweißen oder Verkleben miteinander verbunden sind.

5. Luftfeder (1) nach einem der Ansprüche 1 bis 4, **dadurch gekennzeichnet, dass** ein erster Faltenbalgbefestigungsbereich (11) an dem Luftfederkolben (3) und ein zweiter Faltenbalgbefestigungsbereich (12) an dem Luftfederdeckel (2) vorgesehen sind, wobei der Durchmesser des ersten Faltenbalgbefestigungsbereichs (11) und der Durchmesser des zweiten Faltenbalgbefestigungsbereichs (12) jeweils kleiner sind als der Durchmesser der Außenführung (5).

6. Luftfeder (1) nach einem der Ansprüche 1 bis 5, **dadurch gekennzeichnet, dass** der Durchmesser des anderen Endbereichs des ersten Teilfaltenbalgs (6) und der Durchmesser des anderen Endbereichs des zweiten Teilfaltenbalgs (8) jeweils kleiner sind als der Durchmesser der Außenführung (5) .

7. Luftfeder (1) nach einem der Ansprüche 1 bis 6, **dadurch gekennzeichnet, dass** die miteinander verbundenen zugewandten Endbereiche (9, 10) im Bereich der Außenführung (5) liegen.

8. Fahrwerk für ein Kraftfahrzeug, insbesondere ein Luftfedersystem, mit einer Luftfeder (1) nach einem der Ansprüche 1 bis 7.

## Claims

1. Air spring (1) for a chassis of a motor vehicle, comprising an air spring cover (2) and an air spring piston (3), wherein a rolling bellows (4) which is fastened in an air-tight manner and consists of elastomer material partially delimits, between the air spring cover (2) and the air spring piston (3), a working chamber (14) which can be filled with compressed air, wherein the rolling bellows (4) is at least partially enclosed by a sleeve-shaped outer guide (5), wherein a folding bellows surrounds the rolling bellows (4) together with outer guide (5), wherein the folding bellows comprises a first sub-folding bellows (6) and a second sub-folding bellows (7), wherein a first end region (9) of the first sub-folding bellows (6) that faces the second sub-folding bellows (7) is connected to a second end region (10) of the second sub-folding bellows (7) that faces the first sub-folding bellows (6), **characterized in that** the first and the second end region (9, 10) overlap, in particular exclusively, in the circumferential direction.

2. Air spring (1) according to Claim 1, **characterized in that** the first and the second end region (9, 10) are connected by means of a releasable form-fitting connection.

3. Air spring (1) according to Claim 2, **characterized in that**, in addition to the form-fitting connection, the first and the second end region (9, 10) are held together by a clamping means (20).

4. Air spring (1) according to Claim 1, **characterized in that** the first and the second end region (9, 10) are connected to one another by welding or adhesive bonding.

5. Air spring (1) according to one of Claims 1 to 4, **characterized in that** a first folding bellows fastening region (11) is provided on the air spring piston (3), and a second folding bellows fastening region (12) is provided on the air spring cover (2), wherein the diameter of the first folding bellows fastening region (11) and the diameter of the second folding bellows fastening region (12) are each smaller than the diameter of the outer guide (5).

6. Air spring (1) according to one of Claims 1 to 5, **characterized in that** the diameter of the other end region of the first sub-folding bellows (6) and the diameter of the other end region of the second sub-folding bellows (7) are each smaller than the diameter of the outer guide (5).

7. Air spring (1) according to one of Claims 1 to 6, **characterized in that** the interconnected facing end regions (9, 10) are situated in the region of the outer guide (5).

8. Chassis for a motor vehicle, in particular an air spring system, having an air spring (1) according to one of Claims 1 to 7.

## Revendications

1. Ressort à air (1) pour un train de roulement d'un véhicule à moteur comprenant un couvercle de ressort à air (2) et un piston de ressort à air (3), dans lequel un soufflet déroulant (4) en matériau élastomère fixé de manière étanche à l'air délimite partiellement, entre le couvercle de ressort à air (2) et le piston de ressort à air (3), un espace de travail (14) pouvant être rempli d'air sous pression, dans lequel le soufflet déroulant (4) est enrobé au moins partiellement par un guide extérieur en forme de gaine (5), dans lequel un soufflet pliant entoure le soufflet déroulant (4) avec le guide extérieur (5), dans lequel le soufflet pliant comprend un premier soufflet pliant partiel (6) et un deuxième soufflet pliant partiel (7), dans lequel une première extrémité (9) du premier soufflet pliant partiel (6) tournée vers le deuxième soufflet pliant partiel (7) est raccordée à une deuxième extrémité (10) du deuxième soufflet pliant partiel (7) tournée vers le premier soufflet pliant partiel (6), **caractérisé en ce que** les première et deuxième extrémités (9, 10) se chevauchent dans la direction circonférentielle, en particulier entièrement.

2. Ressort à air (1) selon la revendication 1, **caractérisé en ce que** les première et deuxième extrémités (9, 10) sont raccordées au moyen d'une complémentarité de formes détachable.

3. Ressort à air (1) selon la revendication 2, **caractérisé en ce que** les première et deuxième extrémités (9, 10) sont en outre assemblées en complémentarité de formes par un moyen de serrage (20).

4. Ressort à air (1) selon la revendication 1, **caractérisé en ce que** ce les première et deuxième extrémités (9, 10) sont raccordées l'une à l'autre par soudage ou collage.

5. Ressort à air (1) selon l'une des revendications 1 à 4, **caractérisé en ce qu'**une première zone de fixation de soufflet pliant (11) est prévue sur le piston de ressort à air (3) et une deuxième zone de fixation de soufflet pliant (12) est prévue sur le couvercle de ressort à air (2), dans lequel le diamètre de la première zone de fixation de soufflet pliant (11) et le diamètre de la deuxième zone de fixation de soufflet pliant (12) sont respectivement inférieurs au diamètre du guide extérieur (5).

6. Ressort à air (1) selon l'une des revendications 1 à 5, **caractérisé en ce que** le diamètre de l'autre extrémité du premier soufflet pliant partiel (6) et le diamètre de l'autre extrémité du deuxième soufflet pliant partiel (7) sont respectivement inférieurs au diamètre du guide extérieur (5).

7. Ressort à air (1) selon l'une des revendications 1 à 6, **caractérisé en ce que** les extrémités (9, 10) tournées l'une vers l'autre et raccordées l'une à l'autre se trouvent dans la zone du guide extérieur (5).

8. Train de roulement pour un véhicule à moteur, en particulier un système de suspension pneumatique, avec un ressort à air (1) selon l'une des revendications 1 à 7.
